(19) Europäisches Patentamt
European Patent Office
Office européen des brevets

(11) EP 4 811 284 A1

# (12) EUROPEAN PATENT APPLICATION

(43) Date of publication:
**23.09.2026 Bulletin 2026/39**

(21) Application number: **25226129.2**

(22) Date of filing: **22.12.2025**

(51) International Patent Classification (IPC):
***G06T 7/11*** *(2017.01)*

(52) Cooperative Patent Classification (CPC):
**G06T 7/11;** G06T 2207/10081; G06T 2207/10088; G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.03.2025 IN 202521023532**

(71) Applicant: **Tata Consultancy Services Limited**
**Mumbai, Maharashtra 400 021 (IN)**

(72) Inventors:
- **DASGUPTA, Soma**
  **700160 Kolkata (IN)**
- **DEY, Swarnava**
  **700160 Kolkata (IN)**
- **GHOSE, Avik**
  **700160 Kolkata (IN)**
- **MUKHERJEE, Arijit**
  **700160 Kolkata (IN)**
- **PAL, Arpan**
  **700160 Kolkata (IN)**

(74) Representative: **Goddar, Heinz J.**
**Boehmert & Boehmert**
**Anwaltspartnerschaft mbB**
**Pettenkoferstrasse 22**
**80336 München (DE)**

## (54) AN ORGAN PRIORITIZED Y-NET MULTI-MODAL IMAGE SEGMENTATION MODEL USING A JOINT MODALITY ENCODER AND DECODERS

(57) Conventional techniques for multi-modal image segmentation are not computationally effective for image analysis. Embodiments herein provide a method and system for an organ prioritized Y-Net multi-modal image segmentation model using a joint modality encoder and decoders. The method trains a genetic Y-Net multi-modal image segmentation model comprising the joint modality encoder, a bottleneck, and a plurality of modality-specific decoders, with each of a plurality of the multi-modal medical images, for a plurality of predefined hyperparameters, to generate a trained Y-Net multi-modal image segmentation model. Further a multi-objective organ prioritization reward function with an organ prioritization is formulated for the plurality of predefined hyperparameters of the trained Y-Net multi-modal image segmentation model. Further the plurality of parameters of the trained Y-Net multi-modal image segmentation model is optimized using the multi-objective organ prioritization reward function, to generate the organ prioritized Y-Net multi-modal image segmentation model.

Spatial features
Multi-Resolution Fused Feature Maps
Modality-Specific Features
Input Data
Joint Modality Encoder
Bottleneck
Modality-Specific Features
Modality-Specific Features
Modality-Specific Decoder 1
Modality Specific Segmentation Masks
Trained Y-Net Multi-modal Image Segmentation Model for predefined hyperparameters
Genetic search for organ prioritization
Modality-Specific Decoder n
Superimposed Segmentation Mask
Spatial features
Organ Prioritized Y-Net Multi-modal Image Segmentation Model

FIG. 2



Processed by Luminess, 75001 PARIS (FR)

## Description

CROSS-REFERENCE TO RELATED APPLICATIONS AND PRIORITY

The present application claims priority to Indian application no. 202521023532, filed on March 17, 2025.

TECHNICAL FIELD

The disclosure herein generally relates to multi-modal image segmentation, and, more particularly, to an organ prioritized Y-Net multi-modal image segmentation model using a joint modality encoder and decoders.

BACKGROUND

Medical imaging and analysis are critical in diagnosing diseases and planning treatments. However, growing concerns over patient data privacy and strict regulations on sharing data over the Internet have made it essential to perform healthcare data analysis locally, either on hospital premises or edge devices. Architectures such as U-Net, with their encoder-decoder design, have been widely adopted for medical image segmentation. Although these models are compact enough to operate on small, embedded platforms, such as those integrated with Computed Tomography (CT) or Magnetic Resonance Imaging (MRI) devices, their segmentation performance often falls short of manual expert analysis. This limitation arises primarily from their inability to effectively utilize multi-modal data, a capability human experts employ by correlating complementary information from different modalities. Without such advanced capabilities, medical image inference models risk failing to meet the objectives of healthcare analytics at the edge devices. Furthermore, this deficiency may hinder access to the rapidly growing Artificial Intelligence (AI) in the medical imaging market, which is projected to expand at a compound annual growth rate of 34.8% from 2024 to 2030.

Most lightweight segmentation approaches are designed for unimodal data, such as the CT or the MRI. However, the key challenge in the multi-modal segmentation lies in the domain differences between modalities like the CT and the MRI, which exhibit varying intensity distributions and imaging properties. Existing methods for mitigating domain shifts, such as joint representation learning, often require spatially aligned or co-registered datasets, which are typically unavailable for the CT and the MRI. Adapting simpler networks for multi-modal analysis thus demands extensive preprocessing, including intensity normalization, harmonization, resampling for voxel consistency and artifact removal (e.g., bias field in MRI and beam hardening in CT). Additionally, architectures with single decoders require manual class harmonization, further complicating training workflows.

A more intuitive solution involves using separate encoders and decoders for each modality, allowing independent feature learning. Dual-stream architectures, for example, employ separate encoder-decoder branches connected via a shared latent space. However, achieving optimal performance with such models often necessitates having separate encoder-decoder pairs for each modality, which increases model complexity and parameter count. While effective, this approach becomes impractical for on-premises execution due to its heavy computational demands. Hence existing multi-modal segmentation techniques face significant challenges, including the handling of unpaired, unregistered, and heterogeneous medical data, along with the high complexity of current models, which often necessitate cloud-based infrastructure. These limitations not only raise privacy concerns but also highlight the urgent need for lightweight, efficient networks capable of handling multi-modal data without compromising accuracy or privacy.

SUMMARY

Embodiments of the present disclosure present technological improvements as solutions to one or more of the above-mentioned technical problems recognized by the inventors in conventional systems. For example, in one embodiment, a method for an organ prioritized Y-Net multi-modal image segmentation model using a joint modality encoder and decoders is provided. The method includes receiving an input data comprising a plurality of multi-modal medical images pertaining to a plurality of subjects, a plurality of ground truth segmentation masks, a plurality of predefined hyperparameters, a predefined reward function value, and a population of the plurality of predefined hyperparameters. The method further includes sequentially training a genetic Y-Net multi-modal image segmentation model comprising a joint modality encoder, a bottle neck, and a plurality of modality-specific decoders, with each of the plurality of the multi-modal medical images, for the plurality of predefined hyperparameters, using a plurality of skip connections, to generate a trained Y-Net multi-modal image segmentation model, wherein the steps for training the trained Y-Net multi-modal image segmentation model with a multi-modal medical image of the plurality of the multi-modal medical images, via the joint modality encoder, the bottleneck, and the plurality of modality-specific decoders comprises: (a) extracting a plurality of multi-resolution fused feature maps from a plurality of modality-invariant features of the e multi-modal medical image, via the joint modality encoder of the genetic Y-Net multi-modal image segmentation model, (b) refining the plurality of multi-

resolution fused feature maps, via the bottleneck of the genetic Y-Net multi-modal image segmentation model, to generate a plurality of modality-specific features that are enhanced with a plurality of complementary features, (c) reconstructing a modality-specific segmentation mask of a plurality of modality specific-segmentation masks, by each of the plurality of modality-specific decoders, by feeding a plurality of spatial features as the plurality of skip connections obtained via the joint modality encoder and the plurality of modality-specific features obtained via the bottleneck, to each of the plurality of modality-specific decoders, wherein the plurality of modality specific-segmentation masks is superimposed to obtain a superimposed segmentation mask, calculating a segmentation loss comprising a dice loss and a latent space consistency loss, by the each of the plurality of modality-specific decoders of the genetic Y-Net multi-modal image segmentation model, using the plurality of modality-specific segmentation masks, and a ground truth segmentation mask of the plurality of ground truth segmentation masks, and obtaining the trained Y-Net multi-modal image segmentation model using the segmentation loss calculated by each of the plurality of modality-specific decoders for the plurality of predefined hyperparameters. The method further includes formulating a multi-objective organ prioritization reward function with an organ prioritization comprising an Intersection over Union (IoU), an average IoU, and a size of the trained Y-Net multi-modal image segmentation model, using the superimposed segmentation mask, for the plurality of predefined hyper-parameters of the trained Y-Net multi-modal image segmentation model. The method further includes optimizing a plurality of predefined hyperparameters of the trained Y-Net multi-modal image segmentation model using the multi-objective organ prioritization reward function, to generate an organ prioritized Y-Net multi-modal image segmentation model.

In another aspect, a system for an organ prioritized Y-Net multi-modal image segmentation model using a joint modality encoder and decoders is provided is provided. The system comprises a memory storing instructions; one or more communication interfaces; and one or more hardware processors coupled to the memory via the one or more communication interfaces, wherein the one or more hardware processors are configured by the instructions to: receive an input data comprising a plurality of multi-modal medical images pertaining to a plurality of subjects, a plurality of ground truth segmentation masks, a plurality of predefined hyperparameters, a predefined reward function value, and a population of the plurality predefined hyperparameters; sequentially train a genetic Y-Net multi-modal image segmentation model comprising a joint modality encoder, a bottle neck, and a plurality of modality-specific decoders, with each of the plurality of the multi-modal medical images, for the plurality of predefined hyperparameters, using a plurality of skip connections, to generate a trained Y-Net multi-modal image segmentation model, wherein the steps for training the trained Y-Net multi-modal image segmentation model with a multi-modal medical image of the plurality of the multi-modal medical images, via the joint modality encoder, the bottleneck, and the plurality of modality-specific decoders comprises: (a) extracting a plurality of multi-resolution fused feature maps from a plurality of modality-invariant features of the multi-modal medical image, via the joint modality encoder of the genetic Y-Net multi-modal image segmentation model; (b) refining the plurality of multi-resolution fused feature maps, via the bottleneck of the genetic Y-Net multi-modal image segmentation model, to generate a plurality of modality-specific features that are enhanced with a plurality of complementary features; (c) reconstructing a modality-specific segmentation mask of a plurality of modality specific-segmentation masks, by each of the plurality of modality-specific decoders, by feeding a plurality of spatial features as the plurality of skip connections obtained via the joint modality encoder and the plurality of modality-specific features obtained via the bottleneck, to each of the plurality of modality-specific decoders, wherein the plurality of modality specific-segmentation masks is superimposed to obtain a superimposed segmentation mask; (d) calculating a segmentation loss comprising a dice loss and a latent space consistency loss, by the each of the plurality of modality-specific decoders of the genetic Y-Net multi-modal image segmentation model, using the plurality of modality-specific segmentation masks, and a ground truth segmentation mask of the plurality of ground truth segmentation masks; and (e) obtaining the trained Y-Net multi-modal image segmentation model using the segmentation loss calculated by each of the plurality of modality-specific decoders for the plurality of predefined hyperparameters; formulate a multi-objective organ prioritization reward function with an organ prioritization comprising an Intersection over Union (IoU), an average IoU, and a size of the trained Y-Net multi-modal image segmentation model , using the superimposed segmentation mask, for the plurality of predefined hyperparameters of the trained Y-Net multi-modal image segmentation model; and optimize a plurality of predefined hyperparameters of the trained Y-Net multi-modal image segmentation model using the multi-objective organ prioritization reward function, to generate an organ prioritized Y-Net multi-modal image segmentation model.

In yet another aspect, there are provided one or more non-transitory 25 machine-readable information storage mediums comprising one or more instructions which when executed by one or more hardware processors cause a method for an organ prioritized Y-Net multi-modal image segmentation model using a joint modality encoder and decoders is provided. The method includes receiving an input data comprising a plurality of multi-modal medical images pertaining to a plurality of subjects, a plurality of ground truth segmentation masks, a plurality of predefined hyperparameters, a predefined reward function value, and a population of the plurality of predefined hyperparameters. The method further includes sequentially training a genetic Y-Net multi-modal image segmentation model comprising a joint modality encoder, a bottle neck, and a plurality of modality-specific decoders, with each of the plurality of the multi-modal medical images, for the plurality of predefined hyperparameters, using a plurality of skip connections, to generate a trained Y-Net multi-modal image segmentation model, wherein the steps for training the trained Y-Net multi-modal image segmentation model with a

multi-modal medical image of the plurality of the multi-modal medical images, via the joint modality encoder, the bottleneck, and the plurality of modality-specific decoders comprises: (a) extracting a plurality of multi-resolution fused feature maps from a plurality of modality-invariant features of the e multi-modal medical image, via the joint modality encoder of the genetic Y-Net multi-modal image segmentation model, (b) refining the plurality of multi-resolution fused feature maps, via the bottleneck of the genetic Y-Net multi-modal image segmentation model, to generate a plurality of modality-specific features that are enhanced with a plurality of complementary features, (c) reconstructing a modality-specific segmentation mask of a plurality of modality specific-segmentation masks, by each of the plurality of modality-specific decoders, by feeding a plurality of spatial features as the plurality of skip connections obtained via the joint modality encoder and the plurality of modality-specific features obtained via the bottleneck, to each of the plurality of modality-specific decoders, wherein the plurality of modality specific-segmentation masks is superimposed to obtain a superimposed segmentation mask, calculating a segmentation loss comprising a dice loss and a latent space consistency loss, by the each of the plurality of modality-specific decoders of the genetic Y-Net multi-modal image segmentation model, using the plurality of modality-specific segmentation masks, and a ground truth segmentation mask of the plurality of ground truth segmentation masks, and obtaining the trained Y-Net multi-modal image segmentation model using the segmentation loss calculated by each of the plurality of modality-specific decoders for the plurality of predefined hyperparameters. The method further includes formulating a multi-objective organ prioritization reward function with an organ prioritization comprising an Intersection over Union (IoU), an average IoU, and a size of the trained Y-Net multi-modal image segmentation model, using the superimposed segmentation mask, for the plurality of predefined hyperparameters of the trained Y-Net multi-modal image segmentation model. The method further includes optimizing a plurality of predefined hyperparameters of the trained Y-Net multi-modal image segmentation model using the multi-objective organ prioritization reward function, to generate an organ prioritized Y-Net multi-modal image segmentation model.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for an organ prioritized Y-net multi-modal image segmentation model using a joint modality encoder and decoders, according to some embodiments of the present disclosure.

FIG. 2 is a functional architecture depicting process flow of the system for the organ prioritized Y-net multi-modal image segmentation model using the joint modality encoder and the decoders, according to some embodiments of the present disclosure.

FIGS. 3A, and 3B depict a flow diagram of a method for the organ prioritized Y-net multi-modal image segmentation model using the joint modality encoder and the decoders, according to some embodiments of the present disclosure.

FIGS. 4A, 4B, 4C, and 4D depict the plurality of segmentation masks generated by state of art models and the trained Y-Net multi-modal image segmentation model on CT scan images and MRI scan images according to some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Multi-modal image segmentation has significant potential for advancing high-quality representation learning, as different modalities provide complementary information about anatomical structures, organs, and diseases. However, there is currently no principled approach to designing compact, edge efficient architectures that effectively leverage multi-modal images for medical image analysis. Existing practices are either manual, relying on expert-driven fusion of features from unregistered and unpaired modalities, or employing overly large architectures with multiple encoders and decoders.

Organ segmentation from Computed Tomography (CT) and Magnetic Resonance Imaging (MRI) scans are designed to assist radiologists and physicians by automating organ identification. However, small models often fail to achieve the accuracy of human experts or larger models due to several factors. First, human experts intuitively use complementary information from multiple imaging modalities (e.g., CT and MRI) to make accurate diagnoses. While single-modality architectures like U-Net perform well on multi-modal medical datasets, they require extensive manual preprocessing, including intensity normalization, voxel resampling, and artifact removal. Additionally, single-decoder architectures need manual class harmonization to align outputs across modalities. Larger models mitigate these issues by employing multi-encoder-decoder setups connected through a shared latent space, but this increases parameter count and computational requirements significantly. Secondly, current models lack mechanisms to prioritize the segmentation of specific organs within multi-organ datasets. In the medical image analysis, physicians often prioritize certain organs based on the patient's context, which current segmentation models cannot replicate.

Embodiments herein provide a method and system for an organ prioritized Y-net multi-modal image segmentation model using a joint modality encoder and decoders. The organ prioritized Y-net multi-modal image segmentation model refers to an architectural framework and computational methodology, excluding any specific trained instance or dataset-dependent parameters. The method trains a genetic Y-Net multi-modal image segmentation model comprising the joint modality encoder, a bottleneck, and a plurality of modality-specific decoders, with each of a plurality of the multi-modal medical images, for a plurality of predefined hyperparameters, to generate a trained Y-Net multi-modal image segmentation model. Further a multi-objective organ prioritization reward function with an organ prioritization is formulated comprising an Intersection over Union (IoU), an average IoU, and a size of the trained Y-Net multi-modal image segmentation model, for the plurality of predefined hyperparameters of the trained Y-Net multi-modal image segmentation model. Further the plurality of parameters of the trained Y-Net multi-modal image segmentation model is optimized using the multi-objective organ prioritization reward function, to generate an organ prioritized Y-Net multi-modal image segmentation model.

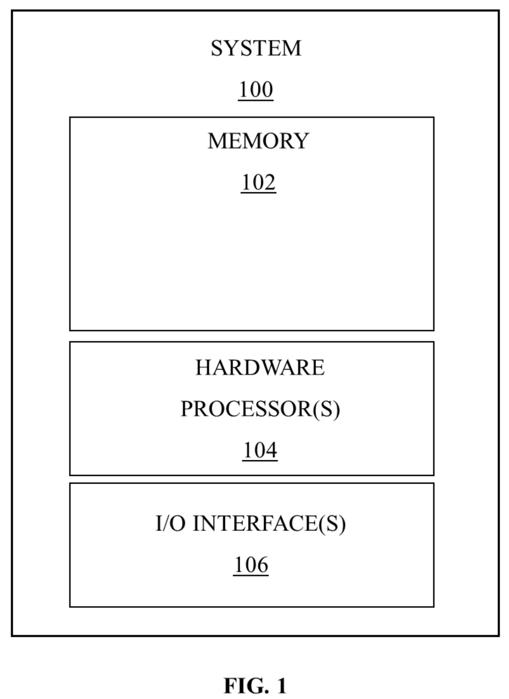

Referring now to the drawings, and more particularly to FIG. 1 through FIG. 4D, where similar reference characters denote corresponding features consistently throughout the figures, there are shown preferred embodiments, and these embodiments are described in the context of the following exemplary system and/or method.

FIG. 1 is a functional block diagram of a system 100 for an organ prioritized Y-Net multi-modal image segmentation model using the joint modality encoder and the decoders, according to some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a plurality of multi-modal medical images, a plurality of subjects, a plurality of ground truth segmentation masks, the plurality of predefined hyperparameters, a predefined reward function value, a population, wherein the database 108 further comprises information on a plurality of multi-resolution fused feature maps, a plurality of modality-specific features, a segmentation mask, a segmentation loss, the multi-objective organ prioritization reward function, the IoU, the average IoU, the size of the trained Y-Net multi-modal image segmentation model, and the like. The memory 102 further comprises a plurality of modules (not shown for various technique(s) such as, the genetic Y-Net multi-modal image segmentation model, the trained Y-Net multi-modal image segmentation model an infographic evaluation model, the organ prioritized Y-Net multi-

modal image segmentation model, a cross-attention mechanism, an Atrous Spatial Pyramid Pooling (ASPP) technique, a Squeeze-and-Excitation technique, and thereof. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

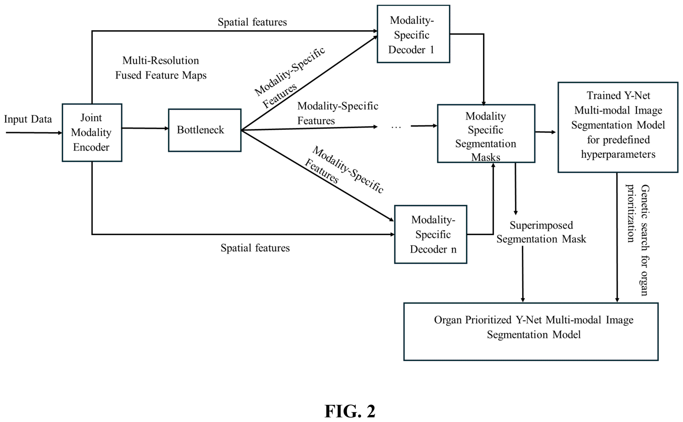

FIG. 2, with reference to FIG. 1, is a functional architecture depicting process flow of the system 100 for the organ prioritized Y-net multi-modal image segmentation model using the joint modality encoder and the decoders, according to some embodiments of the present disclosure. The system 100 receives an input data comprising the plurality of multi-modal medical images pertaining to the plurality of subjects, the plurality of ground truth segmentation masks, the plurality of predefined hyperparameters, the predefined reward function value, and the population of the plurality predefined hyperparameters. The system 100 trains the genetic Y-Net multi-modal image segmentation model comprising the joint modality encoder, the bottleneck, and the plurality of modality-specific decoders, with each of the plurality of the multi-modal medical images, for the plurality of predefined hyperparameters, to generate the trained Y-Net multi-modal image segmentation model. The system 100 extracts the plurality of multi-resolution fused feature maps from a plurality of modality-invariant features of the plurality of multi-modal medical images, via a Joint Modality Encoder component as depicted in FIG. 2. Further at a Bottleneck component of the FIG. 2 of the system 100 refine the plurality of multi-resolution fused feature maps, to generate the plurality of modality-specific features that are enhanced with a plurality of complementary features. Further a plurality of modality specific-segmentation masks is reconstructed, by the plurality of modality-specific decoders, by feeding a plurality of spatial features as a plurality of skip connections obtained via the Joint Modality Encoder component and the plurality of modality-specific features obtained via the Bottleneck component, to each of Modality-Specific Decoder components as depicted in FIG. 2. The plurality of modality specific-segmentation masks is superimposed to obtain a superimposed segmentation mask. Further the segmentation loss comprising a dice loss and a latent space consistency loss is calculated, by each of the each of the plurality of modality-specific decoders of the genetic Y-Net multi-modal image segmentation model, using the plurality of modality-specific segmentation masks, and t the plurality of ground truth segmentation masks, at the Modality-Specific Decoder components of the FIG. 2. The trained Y-Net multi-modal image segmentation model is obtained using the segmentation loss calculated by each of the plurality of modality-specific decoders for the plurality of predefined hyperparameters, at the Trained Y-Net Multi-modal Image Segmentation Model component of the FIG. 2. Further the multi-objective organ prioritization reward function with an organ prioritization comprising an Intersection over Union (IoU), an average IoU, and the size of the trained Y-Net multi-modal image segmentation model is formulated using the superimposed segmentation mask, for the plurality of predefined hyperparameters of the trained Y-Net multi-modal image segmentation model. The plurality of predefined hyperparameters of the trained Y-Net multi-modal image segmentation model are optimized using the multi-objective organ prioritization reward function, via a genetic search, to generate the organ prioritized Y-Net multi-modal image segmentation model, at the Organ Prioritized Y-Net Multi-modal Image Segmentation Model component as depicted in FIG. 2.

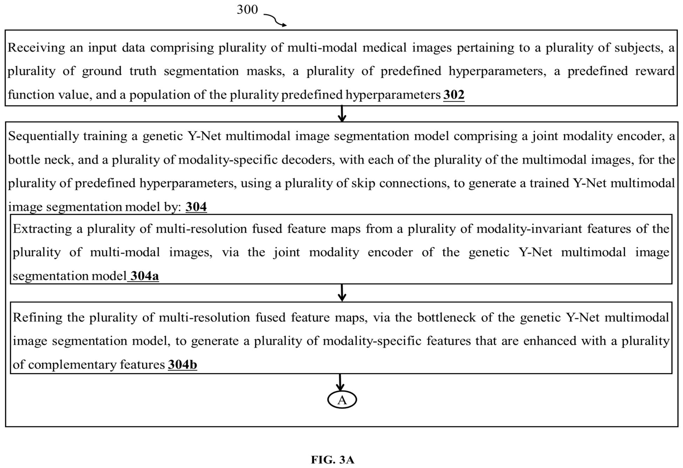

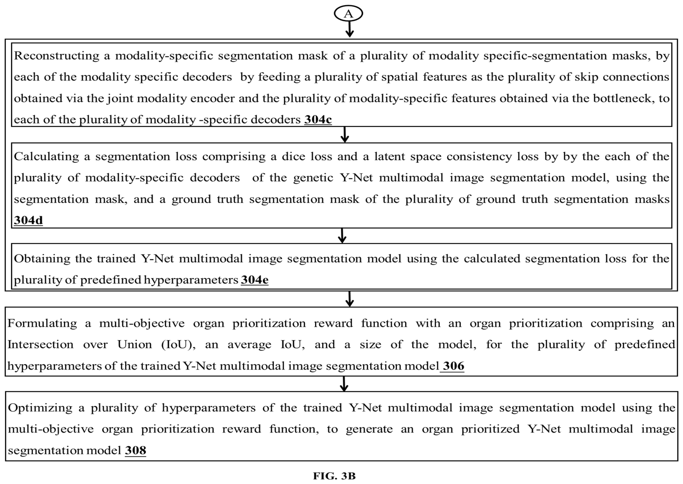

FIGS. 3A, and 3B depict a flow diagram of a method 300 for the organ prioritized Y-net multi-modal image segmentation model using the joint modality encoder and decoders, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIGS. 3A, and 3B. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Referring to steps of FIG. 3A, at step 302 of the method 300, the one or more hardware processors 104 are configured to receive the input data comprising the plurality of multi-modal medical images pertaining to the plurality of subjects, the plurality of ground truth segmentation masks, the plurality of predefined hyperparameters, the predefined reward function value, and the population of the plurality of predefined hyperparameters. The plurality of multi-modal medical images comprises a plurality of CT scan images, a plurality of MRI scan images, a plurality of X-ray scan images, a plurality of positron emission tomography (PET) scan images and thereof, according to some embodiments of present disclosure. Further each of the plurality of multi-modal medical images comprises the plurality of modality-invariant features. The plurality of subjects corresponds to organs of the human body for which medical scan is performed. The

plurality of predefined hyperparameters includes a learning rate, a batch size, an activation function, an optimizer, a weight decay, a plurality of epochs, a drop rate, and thereof. The population of the plurality of predefined hyperparameters corresponds to a permissible range of the plurality of predefined hyperparameters.

At step 304 of the method 300, the one or more hardware processors 104 are configured to sequentially train the genetic Y-Net multi-modal image segmentation model comprising the joint modality encoder, the bottle neck, and the plurality of modality-specific decoders, with each of the received plurality of the multi-modal medical images, for the plurality of predefined hyperparameters, using the plurality of skip connections, to generate the trained Y-Net multi-modal image segmentation model. The plurality of modality-specific decoders comprises a CT decoder, an MRI decoder, an X-ray decoder, a PET decoder, and thereof. In an embodiment, the genetic Y-Net multi-modal image segmentation model is trained with a multi-modal medical image of the plurality of the multi-modal medical images, using the plurality of skip connections, via the joint modality encoder, the bottleneck, and the plurality of modality-specific decoders is explained through steps 304a to 304e.

At step 304a of the method 300, the one or more hardware processors 104 are configured to extract the plurality of multi-resolution fused feature maps from the plurality of modality-invariant features of the multi-modal medical image, via the joint modality encoder of the genetic Y-Net multi-modal image segmentation model. The joint modality encoder of the genetic Y-Net multi-modal image segmentation model is responsible for extracting a plurality of hierarchical features from the plurality of multi-modal medical images using a plurality of shared convolutional layers, promoting to learn the plurality of modality-invariant features of the plurality of multi-modal medical images. The plurality of multi-resolution fused feature maps is also referred to as a plurality of hierarchical features according to some embodiments of the present disclosure. The cross-attention mechanism enhances the interdependence between the plurality of modality-invariant features of the plurality of multi-modal medical images, and the plurality of complementary features is dynamically aligned through the cross-attention mechanism. Aggregation of the plurality of hierarchical features of the plurality of multi-modal medical images is achieved through the plurality of skip connections, ensuring the plurality of spatial features are preserved for the plurality of modality-specific decoders.

The extraction of the plurality of multi-resolution fused feature maps from the plurality of modality-invariant features of the plurality of multi-modal images, via the joint modality encoder of the genetic Y-Net multi-modal image segmentation model initially comprises performing a feature transformation on the plurality of modality-invariant features through a plurality of shared convolutional layers of the genetic Y-Net multi-modal image segmentation model, to generate a plurality of transformed modality-invariant features. Each of the plurality of shared convolutional layers of the genetic Y-Net multi-modal image segmentation model performs the following operation:

$$F_l = \sigma(\alpha\ l W_l * F_{l-1} + b_l) \quad (1)$$

where $F_l$ is the multi-resolution fused feature map at a shared convolution layer $l$;
$W_l$ and $b_l$ are associated weights and biases;
$\alpha$ denotes dynamically adjusted feature importance of the multi-resolution fused feature map;
* denotes a convolution operation; and
$\sigma$ is the activation function (e.g., ReLU).

Output dimensions of the plurality of shared convolutional layers: The output height and width after the shared convolutional layer are given by:

$$H_{out} = \lfloor \frac{H_{in} - K + 2P}{S} \rfloor + 1 \quad (2)$$

$$W_{out} = \lfloor \frac{W_{in} - K + 2P}{S} \rfloor + 1 \quad (3)$$

where $H_{in}$, $W_{in}$ are input dimensions
$K$ is kernel size;
$P$ is the padding; and
$S$ is the stride.

Further the cross-attention mechanism is performed on the plurality of transformed modality-invariant features, to obtain the plurality of cross modality features. The cross-attention mechanism integrates the plurality of transformed modality-invariant features. For example, the integration of CT features and MRI features using the cross-attention

mechanism is as follows:

$$A_{CT,MRI} = softmax\left(\frac{Q_{CT} \cdot K_{MRI}^{\top}}{\sqrt{d}}\right) . V_{MRI} \qquad (4)$$

where *Q, K,* and *V* are query, key, and value matrices derived received from the CT features and the MRI features; and *d* is the dimensionality of key vectors.

Further the plurality of spatial features of the joint modality encoder are aggregated with the obtained plurality of cross modality features, to obtain a feature representation comprising the plurality of multi-resolution fused feature maps. The plurality of multi-resolution fused feature maps are aggregated features of the plurality of modality-invariant features. The feature representation is used for further calculating the latent space consistency loss.

Upon extracting the plurality of multi-resolution fused feature maps, at step 304b of the method 300, the one or more hardware processors 104 are configured to refine the plurality of multi-resolution fused feature maps, via the bottleneck of the genetic Y-Net multi-modal image segmentation model, to generate the plurality of modality-specific features that are enhanced with the plurality of complementary features. The bottleneck transforms the plurality of multi-resolution fused feature maps into a compact, enriched representation. Squeeze-and-Excitation (SE) blocks of the bottleneck dynamically emphasize important modality-specific features to generate the plurality of modality-specific features. Further dense connectivity of the bottleneck ensures efficient feature reuse and gradient flow. Additionally, the ASPP technique in the bottleneck captures multi-scale contextual information using parallel convolutions with varying dilation rates. The steps for refining the plurality of multi-resolution fused feature maps, via the bottleneck of the genetic Y-Net multi-modal image segmentation model comprises:

(a) Refining the plurality of multi-resolution fused feature maps, using the ASPP technique, to generate a plurality of multiscale features.

(b) Refining the plurality of multiscale features, using the Squeeze-and-Excitation technique, to generate the plurality of modality-specific features.

The mathematical formulation of the dense connectivity in the bottleneck for a dense block with *n* layers and growth rate *k* is given by:

$$F_{dense} = [F_{l-1}, F_l] \qquad (5)$$

where $F_l = \sigma(W_l * F_{l-1} + b_l)$,

$F_{dense}$ is an output feature map of a dense connection, which concatenates the plurality of multi-resolution fused feature maps from previous and current layers;

$F_{l-1}$ a multi-resolution fused feature map from previous layer, ensuring information flow from earlier layers;

$F_l$ is the multi-resolution fused feature map from the current layer, which captures newly extracted features.

The total output channels of the bottleneck are given by:

$$C_{dense} = C_{in} + n.k \qquad (6)$$

where $C_{in}$ total number of input channels from previous layers; and

[. ] denotes concatenation which denotes the concatenation of the plurality of multi-resolution fused feature maps, a key property of dense connections where each layer receives inputs from all preceding layers.

Further the plurality of multiscale features from the plurality of multi-resolution fused feature maps is extracted, using the ASPP technique. The mathematical formulation for an effective kernel size for dilated convolutions in the ASPP technique is as follows:

$$K_{effective} = K + (K - 1) \cdot (r - 1) \qquad (7)$$

where r is the dilation rate.

From the extracted plurality of multiscale features, the plurality of modality-specific features is extracted using the Squeeze-and-Excitation technique. The Squeeze-and-Excitation (SE) Blocks in the Squeeze-and-Excitation technique

computes modality-specific weights of the extracted plurality of multiscale features. A SE block compute modality-specific weights as follows:

$$W_{modality} = \sigma\left(FC_2\left(\delta\left(FC_1(F)\right)\right)\right) \quad (8)$$

where $FC_1$, and $FC_2$ are the fully connected layers;
$F$ denotes residual excitation mechanism;
$\delta$ is a Rectified Linear Unit (ReLU) activation function; and
$\sigma$ is a sigmoid activation function.

Upon generating the plurality of modality-specific features at the bottleneck, at step 304c of the method 300, the one or more hardware processors 104 are configured to reconstruct the modality-specific segmentation mask of the plurality of modality specific-segmentation masks, by each of the plurality of modality-specific decoders, by feeding the plurality of spatial features as the plurality of skip connections obtained via the joint modality encoder and the plurality of modality-specific features obtained via the bottleneck, to each of the plurality of modality-specific decoders. Further the plurality of modality specific-segmentation masks is superimposed to obtain the superimposed segmentation mask. The plurality of modality-specific decoders reconstructs the plurality of modality-specific segmentation masks. It is very important to keep a fan-out structure with the plurality of modality-specific decoders as the attention-guided upsampling refines the most relevant regions and compensates for capacity loss in the joint modality encoder. The plurality of skip connections from the joint modality encoder restores the plurality of spatial features.

The plurality of modality-specific decoders performs upsampling (Transposed Convolution), and Attention-Guided Upsampling for generating the plurality of modality-specific segmentation masks. The mathematical formulation for upsampling is as follows:

$$F_{up} = \sigma\left(W_{up} * F_l^{\mathrm{T}} + b_{up}\right) \quad (9)$$

where T denotes the transposed convolution;
$F_{up}$ denotes upsampling;
$\Sigma$ denotes an activation function (e.g., sigmoid or ReLU);
$W_{up}$ a weight matrix for upsampling;
*is a convolution operation;
$F_l^{\mathrm{T}}$ a transposed; and
$b_{up}$ a bias term for upsampling.

Attention-Guided Upsampling: The plurality of modality-specific features is refined using spatial attention as follows:

$$A = softmax\left(W_a * \left[F_{skip}, F_{up}\right]\right) \quad (10)$$

where $F_{skip}$ is a spatial feature from the joint modality encoder;
*softmax* denotes a normalization function;
$A$ denotes activation weight matrix;
$W_a$ is a learnable weight matrix applied to the plurality of modality-specific features; and
$F_{up}$ denotes upsampling.

At step 304d of the method 300, the one or more hardware processors 104 are configured to calculate the segmentation loss comprising the dice loss and the latent space consistency loss, by each of the plurality of modality-specific decoders of the genetic Y-Net multi-modal image segmentation model, using the plurality of modality-specific segmentation masks, and the ground truth segmentation mask of the plurality of ground truth segmentation masks. The Y-Net multi-modal image segmentation model is trained in a supervised manner using alternate batches of the plurality of multi-modal medical images comprising the plurality of CT scan images, the plurality of MRI scan images, the plurality of X-ray scan images, the plurality of PET scan images, and along with the corresponding ground truth segmentation masks, according to some embodiments of the present disclosure. The training objective combines the dice loss and the latent space consistency loss. The dice loss of the segmentation loss is calculated from the segmentation mask, and the ground

truth mask, for the multi-modal medical image of the plurality of multi-modal medical images is as follows:

$$L_{Dice}(t) = 1 - \frac{2\sum O_i Y_i}{\sum O_i + \sum Yi + \epsilon} \quad (11)$$

where $O_i$ and $Y_i$ are predicted segmentation mask and the ground truth segmentation maps, respectively;
$t$ denotes an epoch; and
$\varepsilon$ is an adjusting factor.

The latent space consistency loss minimizes alignment error between the plurality of modality-specific features. This is needed only for the joint modality encoder, which tries to learn the plurality of multi-resolution fused feature maps in a unified latent space. During each training iteration, the segmentation loss minimizes the gap between embeddings of a current multi-modal medical image (e.g., CT scan image) with the embeddings from a previous multi-modal medical image (e.g., MRI scan image). The disclosed latent space consistency loss specifically designed for multi-modal medical imaging, ensuring that the genetic Y-Net multi-modal image segmentation model learns consistent representations of data across different modalities (e.g., CT, MRI, PET, X-ray, and so on). The latent space consistency loss encourages alignment of the plurality of spatial features as the plurality of skip connections obtained via the joint modality encoder across training iterations, making it adaptable to any number of modalities, while still preserving the plurality of modality-specific features. This approach is simple yet effective, providing solution for multi-modal medical imaging analysis, especially in edge device deployment.

The latent space consistency loss is defined as follows for plurality of multi-modal medical images:

$$L_{consistency} = \frac{1}{N} \sum_{i=1}^{N} [w_{modality_i}(t) \; . || \; F_{modality_i}(t) - F_{modality_i}(t-1)||^2] \quad (12)$$

where $F_{modality_i}(t)$ represents intermediate feature of modality i at iteration $t$;
$w_{modality_i}(t)$ is an adaptive weight assigned to modality $i$ at iteration $t$;

The summation across $N$ modalities ensures that the latent space consistency loss is computed over all the modalities, capturing the relationships between different modalities at each training step.

The steps for calculating the latent space consistency loss of the segmentation loss from the segmentation mask for the multi-modal image includes:

(a) Calculate an adaptive weight of the of the multi-modal image. The adaptive weight of the CT scan image and the MRI scan image are calculated as follows:

$$w_{CT}(t) = \frac{\|F_{CT}(t)\|}{\|F_{CT}(t)\| + \|F_{MRI}(t)\|} \quad (13)$$

$$w_{MRI}(t) = \frac{\|F_{MRI}(t)\|}{\|F_{CT}(t)\| + \|F_{MRI}(t)\|} \quad (14)$$

where $\| F_{CT}(t) \|$ represents magnitude of intermediate features from the CT scan image;
$\| F_{MRI} (t) \|$ represents magnitude of intermediate features from the MRI scan image; if the modality-specific features of the CT scan image are more significant (larger magnitude), then $w_{CT}(t)$ will be larger; and
if the modality-specific features of the MRI scan image are more significant, then $w_{MRI}(t)$will be larger.

(b) Calculating the latent space consistency loss using the adaptive weight of the of multi-modal image. The consistency loss is calculated based on the feature representation of the multi-modal medical image at present epoch ($t$), and the the feature representation of the multi-modal medical image at previous epoch ($t$ - 1). For example, for the CT scan image and the MRI scan image the latent space consistency loss is calculated as follows. Here the feature representation of the CT scan image and the MRI scan image are compared across the iterations to ensure consistency in the joint modality encoder, while also adjusting for the modality's significance.

$$L_{consistency}(t) = w_{CT}(t) \,.\| F_{CT}(t) - F_{CT}(t-1) \|^2 + w_{MRI}(t) \, \| F_{MRI}(t) - F_{MRI}(t-1)\|^2] \quad (15)$$

Upon calculating the the latent space consistency loss, the segmentation loss is obtained by augmenting the dice loss with the latent space consistency loss. The computation of the segmentation loss is as follows:

$$L_{Segmentation} = L_{Dice}(t) + L_{consistency}(t) \quad (16)$$

where $L_{Dice}(t)$ is the dice loss for the current iteration; and
$L_{consistency}(t)$ is an adaptive consistency loss.

Upon obtaining the segmentation loss by the each of the plurality of modality-specific decoders of the genetic Y-Net multi-modal image segmentation model, using the plurality of modality-specific segmentation masks, and the plurality of ground truth segmentation masks, at step 304e of the method 300, the one or more hardware processors 104 are configured to obtain the trained Y-Net multi-modal image segmentation model using the segmentation loss calculated by each of the plurality of modality-specific decoders for the plurality of predefined hyperparameters. The trained Y-Net multi-modal image segmentation model efficiently performs multimodal medical image segmentation with the joint modality encoder, the bottleneck, and the plurality of modality-specific decoders. The joint modality encoder extracts the plurality of multi-resolution fused feature maps from the plurality of modality-invariant features, and the bottleneck uses the SE blocks, the dense Connectivity, and the ASPP technique for multi-scale, to generate the plurality of modality-specific features. The plurality of modality-specific decoders reconstructs the plurality of modality-specific segmentation masks using attention-guided upsampling, with the latent space consistency loss ensuring coherence. This Y-shaped design of the trained Y-Net multi-modal image segmentation model enables shared learning and precise modality refinement, ensuring accurate and robust segmentation.

Upon obtaining the trained Y-Net multi-modal image segmentation model using the segmentation loss calculated by each of the plurality of modality-specific decoders for the plurality of predefined hyperparameters, at step 306 of the method 300, the one or more hardware processors 104 are configured to formulate the multi-objective organ prioritization reward function with the organ prioritization comprising the IoU, the average IoU, and the size of the trained Y-Net multi-modal image segmentation model, using the superimposed segmentation mask, for the plurality of predefined hyper-parameters of the trained Y-Net multi-modal image segmentation model. Unlike traditional AutoML tools, which solely optimize for general segmentation accuracy, the method of present disclosure specifically emphasizes prioritizing segmentation of selected organs, thereby optimizing for clinical relevance. The method of present disclosure introduces the multi-objective organ prioritization reward function tailored for multi-modal medical imaging tasks. The multi-objective organ prioritization reward function aims to optimize the segmentation performance of a specific organ while also maintaining general segmentation accuracy and controlling complexity of the trained Y-Net multi-modal image segmentation model by balancing three core objectives such as (1) general segmentation accuracy that is measured by the traditional IoU across all organs, (2) organ specific accuracy that is measured by the IoU of the selected organ $IoU_o$, allowing for prioritized segmentation of critical organs (such as tumors, brain, or heart), and (3) efficiency of the trained Y-Net multi-modal image segmentation model representing the number of parameters P, penalizing overly complex models that might be inefficient for deployment, particularly in realtime or resource-constrained applications.

The steps for formulating the multi-objective organ prioritization reward function for the plurality of predefined hyperparameters of the trained Y-Net multi-modal image segmentation model comprises:

(a) Obtaining the IoU of the trained Y-Net multi-modal image segmentation model across each of the plurality of subjects, by comparing the ground truth with the superimposed segmentation mask of the multi-modal image.
(b) Obtaining an average IoU of the of the trained Y-Net multi-modal image segmentation model across the plurality of subjects.
(c) Formulating the IoU, the average IoU, and size of the trained Y-Net multi-modal image segmentation model, to obtain the multi-objective organ prioritization reward function.

The mathematical formulation of the multi-objective organ prioritization reward function is as follows:

$$F^o = \alpha \cdot IoU + \beta \cdot IoU_o - \gamma \cdot P, \alpha + \beta + \gamma = 0 \quad (17)$$

where $\alpha$ is weighting for the general segmentation accuracy (IoU);
$\beta$ is weighting for the specific organ of interest ($IoU_o$); and
$\gamma$ is weighting for the efficiency of the the trained Y-Net multi-modal image segmentation model, penalizing the number of parameters.

The multi-objective organ prioritization reward function ensures that the trained Y-Net multi-modal image segmentation model not only optimizes for overall accuracy but also focuses on improving the segmentation of the prioritized organ.

Upon formulating the multi-objective organ prioritization reward function with the organ prioritization, at step 308 of the method 300, the one or more hardware processors 104 are configured to optimize the plurality of predefined hyperparameters of the trained Y-Net multi-modal image segmentation model using the multi-objective organ prioritization reward function, to generate the organ prioritized Y-Net multi-modal image segmentation model. Optimizing the plurality of predefined hyperparameters of the trained Y-Net multi-modal image segmentation model using the multi-objective organ prioritization reward function, to generate the organ prioritized Y-Net multi-modal image segmentation model comprises calculating a multi-objective organ prioritization reward function value of the multi-objective organ prioritization reward function. If the multi-objective organ prioritization value lies above the predefined reward function value, then the organ prioritized Y-Net multi-modal image segmentation model is obtained with the plurality of predefined hyperparameters, and if the multi-objective organ prioritization value lies below the predefined reward function value, then the genetic search is iteratively performed on the population of the plurality predefined hyperparameters of the trained Y-Net multi-modal image segmentation model, till the multi-objective organ prioritization value lies above the predefined reward function value, to obtain a plurality new hyper parameters, and the organ prioritized Y-Net multi-modal image segmentation model is obtained based on the plurality new hyper parameters.

The organ prioritized Y-Net multi-modal image segmentation model during an inferencing stage, upon receiving one or more new multi-modal medical images, predicts an organ prioritized superimposed segmentation mask, for the medical image analysis. The one or more new multi-modal medical images are fed to the organ prioritized Y-Net multi-modal image segmentation model. If the organ prioritized Y-Net multi-modal image segmentation model is fed with a single multi-modal medical image of the one or more new multi-modal medical images, the joint modality encoder processes it independently, and generates the plurality of multi-resolution fused feature maps, without requiring the other modalities. If the organ prioritized Y-Net multi-modal image segmentation model is fed with more than one multi-modal medical image of the one or more new multi-modal medical images, they are passed through the joint modality encoder to extract the plurality of multi-resolution fused feature maps. The obtained plurality of multi-resolution fused feature maps is passed to the bottleneck to generate the plurality of modality-specific features. The plurality of modality-specific features is fed to the plurality of modality-specific decoders based on the received one or more new multi-modal medical images. The plurality of modality-specific decoders generates the plurality of modality-specific segmentation masks, which are superimposed to generate the organ prioritized superimposed segmentation mask. The organ prioritized Y-Net multi-modal image segmentation model which is the Y-Net architecture can infer with single modality to generate the segmentation mask that enables healthcare professionals to work with limited resources. For example, the organ prioritized Y-Net multi-modal image segmentation model can work with only the CT scan image or the MRI scan image, which do not require all the modalities during the inference.

The method of the present disclosure pertains to the organ prioritized Y-Net multi-modal image segmentation model which is the Y-Net architecture, an advanced multi-modal medical image segmentation framework designed with the joint modality encoder, the bottleneck, the plurality of modality-specific decoders. The method of present of disclosure finetunes the organ prioritized Y-Net multi-modal image segmentation model using the genetic search, ensuring optimized performance across different imaging modalities. The method of present disclosure is independent of any specific dataset.

## Experimental Results

**Dataset Description:** The CHAOS dataset ("https://www.kaggle.com/datasets/anhoangvo/chaos-t1-and-t2") was a multi-modal resource for abdominal organ segmentation, combining CT and MRI data to address domain shifts and anatomical variability. The CT dataset included with 40 liver donor scans acquired during the portal venous phase with a resolution of 512×512, x-y spacing of 0.7-0.8 mm, and inter-slice distance (ISD) of 3-3.2 mm, containing 1367 training slices and 1408 testing slices. The MRI dataset consisted of 120 data points from T1-DUAL (inphase and out-phase) and T2-SPIR sequences, with a resolution of 256×256, x-y spacing of 1.36-1.89 mm, and inter-slice distance (ISD) of 5.5-9 mm, providing 1594 training slices and 1537 testing slices. T1-DUAL sequences excel at boundary delineation with fat suppression, while T2-SPIR improves vessel clarity and reduces motion artifacts. Combining CT and MRI strengths, the CHAOS dataset supports multi-modal segmentation research, enabling robust models to address domain-specific challenges across modalities.

The genetic Y-Net multi-modal image segmentation model trained using a supervised approach with consistency loss functions for CT and MRI data, alternating between batches of each modality. The genetic Y-Net multi-modal image segmentation model was optimized with Adam (learning rate 0.001), and Dice loss ensures stable and accurate segmentation:

$$L_{Dice} = 1 - \frac{2\sum O_i Y_i}{\sum O_i + \sum Yi + \epsilon}$$

where $O_i$ and $Y_i$ are the predicted and ground-truth segmentation, respectively, and $\varepsilon$ is the adjusting factor.

Mini batches of size 8 and runs for 20,000 iterations (50 epochs) with early stopping are used for training. Skip connections and attention-guided upsampling refine segmentation in the modality specific decoder. During testing, single modality data was fed into the network, and the performance is evaluated using the IoU. The latent space consistency loss term was used during training to ensure the alignment of outputs from the plurality of modality-specific decoders.

During inference, the genetic Y-Net multi-modal image segmentation model processed CT and MRI data through the plurality of modality-specific decoders, producing accurate segmentation outputs. The latent space consistency loss ensures alignment between the plurality of modality-specific decoders, resulting in coherent segmentation masks. This made the Y-Net multi-modal image segmentation model highly effective for clinical multimodal medical image analysis. Preliminary analyses of the inference performance of the trained Y-Net multi-modal image segmentation model of 0.34M parameters on a DELL Latitude 3410 laptop equipped with an Intel Core i5 processor (1.8 GHz, turbo up to 4.6 GHz), 16 GB RAM, and a 512 GB SSD, without GPU support was performed. The trained multi-modal image segmentation model was tested on 1024x1024 pixel images with an inference time of 0.6s per image.

Quantitative assessment of the trained Y-Net multi-modal image segmentation model for abdominal multi-organ CT- MR (T1-DUALin/out and T2-SPIR) image segmentation on the CHAOS dataset has been depicted in Table. 1. TR: Training Set, TS: Test Set, M: Model, P: Parameters, L: Liver, L/K: Left Kidney, R/K: Right Kidney, S: Spleen, MR: MRI T1 Dual + MRI T2 SPIR, Avg: Average IoU. The trained Y-Net multi-modal image segmentation model in tables are referred to as Y-Net.

**Table. 1**

| TR | TS | M | P | L | L/K | R/K | S | Avg |
|---|---|---|---|---|---|---|---|---|
| **CT** | **CT** | Y-Net (0.25M) | 0.25M | 85.8 | N/A | N/A | N/A | 85.8 |
| **MR-T1** | **MR-T1** | Y-Net (0.27M) | 0.27M | 85.4 | 88.1 | 88.6 | 84.2 | 86.5 |
| **MR-T2** | **MR-T2** | Y-Net (0.28M) | 0.28M | 84.9 | 86.2 | 87.9 | 83.4 | 85.6 |
| **CT-MR** | **CT** | Y-Net | 0.34M | **93.5** | N/A | N/A | N/A | 93.5 |
| | **MR** | | | 88.7 | 91.2 | 92.3 | 86.4 | 89.6 |
| | **CT-MR** | | | 92.7 | **93.4** | **94.2** | **89.1** | 92.3 |

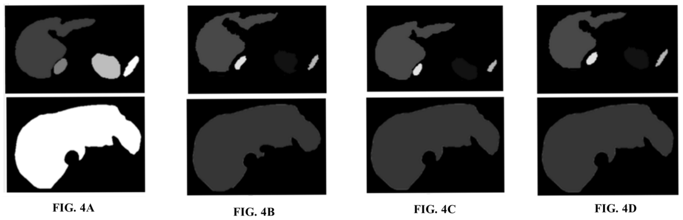

The first two rows of Table.1 showed performance of the trained Y-Net multi-modal image segmentation model when trained and tested on single modalities: CT, MRI-T1, and MRI-T2. In these cases, the trained Y-Net multi-modal image segmentation model functioned as a single encoder-decoder, achieving average IoU scores of 85.8% for CT, 86.5% for MRI-T1, and 85.6% for MRI-T2, reflecting limitations in fully leveraging single-modality data. Switching to joint CT-MRI training, the trained Y-Net multi-modal image segmentation model used a dual-decoder architecture, with modality-specific features passed through respective the modality-specific decoders and preserved via skip connections. Subsequent rows in Table I showed significant improvements with joint CT-MRI training, achieving IoUs of 93.5% for CT, 89.6% for MRI, and 92.3% for CT-MRI combined. The plurality of modality-specific decoders design enhances segmentation accuracy by preserving semantic information across the modalities. The method of present disclosure resulted in a significant performance boost, with an average IoU of 93.5%, showing a 7% improvement over single-modality results. Segmentation masks generated by the state of art models and the trained Y-Net multi-modal image segmentation model on CT and MRI are depicted in FIGS. 4A, 4B, 4C, and 4D. The ground truth segmentation mask is depicted in FIG. 4A. FIG. 4B depicts the segmentation mask generated by a Dual Stream V4 architecture. FIG. 4C depicts the segmentation mask generated by Cv19pUnet1-1. FIG. 4D depicts the segmentation mask generated by the trained Y-Net multi-modal image segmentation model. The trained Y-Net multi-modal image segmentation model performs very well with much lower parameters demonstrating its ability to perform accurate segmentation as depicted in FIG. 4D.

Table. 2, and Table. 3 present a comparative analysis of the trained Y-Net multi-modal image segmentation model (0.34M parameters) against two state-of-the-art models, using the CHAOS dataset, training-validation-test split, and number of epochs for fairness. The trained Y-Net multi-modal image segmentation model is compared with an existing Dual Stream V4 architecture (11M parameters), which processes CT and MRI inputs through separate encoder streams, sharing weights only at the final scale to form a unified latent representation. This shared representation was passed to the plurality of modality-specific decoders, preserving modality-specific features while enabling shared learning. Results from both models are shown in Table. 2. Table. 2 depicts comparative assessment of IoU of the trained Y-Net multi-modal image

segmentation model with DSV4 for abdominal multi-organ CT- MR (T1-DUALin/out and T2-SPIR) image segmentation on CHAOS dataset. Where DS-V4: Dual Stream V4. Where TR: Training Set, TS: Test Set, M: Model, P: Parameters, L: Liver, L/K: Left Kidney, R/K: Right Kidney, S: Spleen, MR: MRI T1 Dual and MRI T2 SPIR combined, CT-MR:CT MRI combined, Avg : Average IoU. Despite a 32x reduction in parameter size, the trained Y-Net multi-modal image segmentation model improves the average IoU by 5% on CTMRI datasets, demonstrating the efficiency of its dual-decoder design with minimal parameters for edge environment.

**Table. 2**

| TR | TS | M | P | L | L/K | R/K | S | Avg |
|---|---|---|---|---|---|---|---|---|
| CT MRI | C T | DS-V4 | 11M | 89.7 | N/A | N/A | N/A | 89.7 |
| | | Y-Net | 0.34M | **93.5** | N/A | N/A | N/A | **93.5** |
| | MR | DS-V4 | 11M | 87.7 | 91.1 | **92.3** | 84 | 88.8 |
| | | Y-Net | 0.34 | **88.7** | **91.2** | **92.3** | **86.4** | **89.6** |
| | CT MR | DS-V4 | 11M | 89.2 | 89.4 | 90.1 | 83.1 | 87.9 |
| | | Y-Net | 0.34M | **92.7** | **93.4** | **94.2** | **89.1** | **92.3** |

In Table. 3, the trained Y-Net multi-modal image segmentation model was compared with the cGv19pU-net1-1(31M parameters), a generator-discriminator architecture from the CHAOS challenge. This model combines GANs with Dice and BCE loss to improve pixel-level accuracy and structural realism in segmentation, with the discriminator enforcing realistic patterns for complex shapes. The joint modality encoder of the trained Y-Net multi-modal image segmentation model extracted the plurality of modality-invariant features, while the bottleneck uses SE blocks, Dense Connectivity, and ASPP to capture multi-scale, modality-specific information. The plurality of modality-specific decoders used attention-guided upsampling, with latent space consistency loss for coherent outputs across modalities. The trained Y-Net multi-modal image segmentation model achieved a remarkable 90x parameter reduction with only a 2% IoU loss for CT and competitive performance on MRI and CT-MRI datasets. Table. 3 depicts comparative assessment of IoU of the trained Y-Net multi-modal image segmentation model with cGv for abdominal multi-organ CT- MR (T1-DUALin/out and T2-SPIR) image segmentation on CHAOS dataset, where cGv: cGv19pUnet1-1. TR: Training Set, TS: Test Set, M: Model, P: Parameters, L:Liver, L/K: Left Kidney, R/K: Right Kidney, S: Spleen, MR: MRI T1 Dual and MRI T2 SPIR combined, CT-MR:CT MRI combined, Avg :Average IoU.

**Table. 3**

| TR | TS | M | P | L | L/K | R/K | S | Avg |
|---|---|---|---|---|---|---|---|---|
| CT MRI | C T | cGv | 0.34M | **95.42** | N/A | N/A | N/A | **95.42** |
| | | Y-Net | 31M | 93.5 | N/A | N/A | N/A | 93.5 |
| | MRT1 | cGv | 31M | 86.27 | 85.95 | 83.29 | **83.4** | 84.7 |
| | | Y-Net | 0.34 | **88.7** | **91.2** | **92.1** | **83.4** | **88.8** |
| | MRT2 | cGv | 31M | 84.8 | 83.9 | 89.2 | 85.8 | 85.9 |
| | | Y-Net | 0.34M | **86.5** | **89.2** | **91.2** | **88.1** | **88.7** |
| | CT MR | cGv | 31M | 90.7 | 91.2 | 89.2 | 83.9 | 88.7 |
| | | Y-Net | 0.34M | **92.7** | **93.4** | **94.2** | **89.1** | **92.3** |

The trained Y-Net multi-modal image segmentation model effectively addressed the critical challenges of multi-modal medical image segmentation by enabling efficient learning from unpaired and unregistered CT and MRI datasets. Through its lightweight design and novel integration of the joint modality encoder and the plurality of modality-specific decoders, the trained Y-Net multi-modal image segmentation model achieves notable improvements in segmentation accuracy while maintaining computational efficiency and safeguarding patient privacy.

Further the method of present disclosure has been validated using the CHAOS dataset ("https://www.kaggle.com/datasets/anhoangvo/chaos-t1-and-t2") which includes unpaired CT and MRI images of four abdominal organs: the liver, kidneys, and spleen for organ prioritization. As shown in Table. **4,** the organ prioritized Y-Net multi-modal image segmentation model outperformed both the merge-split dual-stream model and the zero-shot Segment Anything model

using only a fraction of parameters. The results in Table. 4 also demonstrated the high resilience of these models to out-of-distribution shifts, attributed to their training on multi-modal data.

**Table. 4**

| Model | Aug. | Liver | Kidney (L) | Kidney (R) | Spleen | Avg. |
|---|---|---|---|---|---|---|
| **SAM (86M)** | None | 89.9 | 88.9 | 87.1 | 88.4 | 88.5 |
| | GBL | 86.5 | 86.2 | 86.2 | 84.1 | 85.7 |
| | ELA | 85.6 | 86.5 | 83.7 | 85.3 | 85.2 |
| | ROT | 88.3 | 88.1 | 86.1 | 82.9 | 86.3 |
| **DS (11M)** | None | 89.2 | 89.4 | 90.1 | 83.1 | 87.9 |
| | GBL | 86.6 | 86.2 | 89.2 | 81.1 | 90.3 |
| | ELA | 85.7 | 86.1 | 96.7 | 80.3 | 90.2 |
| | ROT | 88.3 | 88.1 | 88.3 | 82.9 | 90.5 |
| **Organ Prioritized Y-Net Multi-Modal Image Segmentation Model (0.34M)** | None | 92.7 | 93.4 | 94.2 | 89.1 | 92.3 |
| | GBL | 90.6 | 91.4 | 92.2 | 87.1 | 90.3 |
| | ELA | 90.7 | 91.2 | 92.7 | 86.3 | 90.2 |
| | ROT | 89.3 | 92.1 | 90.7 | 89.9 | 90.5 |

Table. 4 depicts IoU comparison for abdominal multi-organ CT- MR (T1-DUAL IN/OUT AND T2-SPIR) SEGMENTATION ON CHAOS. L: left, R: right, AVG: average IoU, AUG.: augmentation in testset, GBL: gaussian blur, ELA: elasticity, ROT: rotational.

A subset of augmentations was used from AugMix on the test data. In contrast, a simple U-Net model trained on either CT or MRI performs poorly under such distribution shifts. Table. 5 highlights the ability to prioritize the performance of a specific organ. By default, the right kidney achieves the highest. This prioritization can be adjusted by tuning the interpolation weights $\alpha$, $\beta$, and $\gamma$. Since the weights sum to one, increasing the weight for an organ ($\beta$) requires reducing the importance of parameter efficiency ($\gamma$), explaining the increase in parameter size.

**Table. 5**

| Focus | Params | Liver | Kidney (L) | Kidney (R) | Spleen | Avg. |
|---|---|---|---|---|---|---|
| **None** | 0.34M | 92.7 | 93.4 | **94.2** | 89.1 | 92.3 |
| **Spleen** | 0.42M | 92.2 | 92.7 | 94.1 | **93.2** | 93.1 |
| **Liver** | 0.41M | **94.6** | 93.1 | 93.9 | 88.9 | 92.6 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Conventional techniques for multi-modal image segmentation are not computationally effective for image analysis. Embodiments herein provide the method and system for the organ prioritized Y-Net multi-modal image segmentation model using the joint modality encoder and the decoders. The method trains the genetic Y-Net multi-modal image segmentation model comprising the joint modality encoder, the bottleneck, and the plurality of modality-specific decoders, with each of the plurality of the multi-modal medical images, for the plurality of predefined hyperparameters, to generate the trained Y-Net multi-modal image segmentation model. The trained Y-Net multi-modal image segmentation model effectively addressed the critical challenges of multi-modal medical image segmentation by enabling efficient learning from unpaired and unregistered CT and MRI datasets. Through its lightweight design and novel integration of the joint modality encoder and the plurality of modality-specific decoders, the trained Y-Net multi-modal image segmentation model achieves notable improvements in segmentation accuracy while maintaining computational efficiency and safeguarding patient privacy. Further the multi-objective organ prioritization reward function with the organ

prioritization is formulated for the plurality of predefined hyperparameters of the trained Y-Net multi-modal image segmentation model. Further the plurality of parameters of the trained Y-Net multi-modal image segmentation model is optimized using the multi-objective organ prioritization reward function, to generate the organ prioritized Y-Net multi-modal image segmentation model.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs. The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media. It is intended that the disclosure and examples be considered as exemplary only, with a true scope of disclosed embodiments being indicated by the following claims.

## Claims

**1.** A processor implemented method (300), the method comprising:

receiving (302), via one or more hardware processors, an input data comprising a plurality of multi-modal medical images pertaining to a plurality of subjects, a plurality of ground truth segmentation masks, a plurality of predefined hyperparameters, a predefined reward function value, and a population of the plurality of predefined hyperparameters;

sequentially training (304), via the one or more hardware processors, a genetic Y-Net multi-modal image segmentation model comprising a joint modality encoder, a bottle neck, and a plurality of modality-specific decoders, with each of the plurality of the multi-modal medical images, for the plurality of predefined hyperparameters, using a plurality of skip connections, to generate a trained Y-Net multi-modal image segmentation model, wherein the steps for training the trained Y-Net multi-modal image segmentation model with a multi-modal medical image of the plurality of the multi-modal medical images, via the joint modality encoder, the bottleneck, and the plurality of modality-specific decoders comprises:

(a) extracting (304a) a plurality of multi-resolution fused feature maps from a plurality of modality-invariant features of the e multi-modal medical image, via the joint modality encoder of the genetic Y-Net multi-modal image segmentation model;
(b) refining (304b) the plurality of multi-resolution fused feature maps, via the bottleneck of the genetic Y-Net multi-modal image segmentation model, to generate a plurality of modality-specific features that are enhanced with a plurality of complementary features;
(c) reconstructing (304c) a modality-specific segmentation mask of a plurality of modality specific-segmentation masks, by each of the plurality of modality-specific decoders, by feeding a plurality of spatial features as the plurality of skip connections obtained via the joint modality encoder and the plurality of modality-specific features obtained via the bottleneck, to each of the plurality of modality-specific decoders, wherein the plurality of modality specific-segmentation masks is superimposed to obtain a superimposed segmentation mask;
(d) calculating (304d) a segmentation loss comprising a dice loss and a latent space consistency loss, by the each of the plurality of modality-specific decoders of the genetic Y-Net multi-modal image segmentation model, using the plurality of modality-specific segmentation masks, and a ground truth segmentation mask of the plurality of ground truth segmentation masks; and
(e) obtaining (304e) the trained Y-Net multi-modal image segmentation model using the segmentation loss calculated by each of the plurality of modality-specific decoders for the plurality of predefined hyperparameters;

formulating (306), via the one or more hardware processors, a multi-objective organ prioritization reward function with an organ prioritization comprising an Intersection over Union (IoU), an average IoU, and a size of the trained Y-Net multi-modal image segmentation model, using the superimposed segmentation mask, for the plurality of predefined hyperparameters of the trained Y-Net multi-modal image segmentation model; and
optimizing (308), via the one or more hardware processors, a plurality of predefined hyperparameters of the trained Y-Net multi-modal image segmentation model using the multi-objective organ prioritization reward function, to generate an organ prioritized Y-Net multi-modal image segmentation model.

**2.** The processor implemented method as claimed in claim 1, wherein the organ prioritized Y-Net multi-modal image segmentation model during an inferencing stage, upon receiving one or more new multi-modal medical images, predicts an organ prioritized superimposed segmentation mask, for a medical image analysis.

**3.** The processor implemented method as claimed in claim 1, wherein the plurality of multi-modal medical images comprises a plurality of Computed Tomography (CT) scan images, a plurality of Magnetic Resonance Imaging (MRI) scan images, a plurality of X-ray scan images, and a plurality of positron emission tomography (PET) scan images, , and wherein each of the plurality of multi-modal medical images comprises the plurality of modality-invariant features.

**4.** The processor implemented method as claimed in claim 1, wherein the steps for extracting the plurality of multi-resolution fused feature maps from the plurality of modality-invariant features of the plurality of multi-modal images, via the joint modality encoder of the genetic Y-Net multi-modal image segmentation model comprises:

performing a feature transformation on the plurality of modality-invariant features through a plurality of shared convolutional layers of the genetic Y-Net multi-modal image segmentation model, to generate a plurality of transformed modality-invariant features;
performing a cross-attention mechanism on the plurality of transformed modality-invariant features, to obtain a plurality of cross modality features; and
aggregating the plurality of spatial features of the joint modality encoder with the plurality of cross modality features, to obtain a feature representation comprising a plurality of multi-resolution fused feature maps, wherein the plurality of multi-resolution fused feature maps are aggregated features of the plurality of modality-invariant features, and wherein the feature representation is used for calculating the latent space consistency loss.

**5.** The processor implemented method as claimed in claim 1, wherein the steps for refining the plurality of multi-resolution fused feature maps, via the bottleneck of the genetic Y-Net multi-modal image segmentation model comprises:

refining the plurality of multi-resolution fused feature maps, using an Atrous Spatial Pyramid Pooling (ASPP) technique, to generate a plurality of multiscale features; and
refining the plurality of multiscale features, using a Squeeze-and-Excitation technique, to generate the plurality of

modality-specific features.

6. The processor implemented method as claimed in claim 1, wherein the steps for calculating the segmentation loss comprising the dice loss and the latent space consistency loss, by each of the each of the plurality of modality-specific decoders of the genetic Y-Net multi-modal image segmentation model comprises:

calculating the dice loss of the segmentation loss from the segmentation mask, and the ground truth mask, for the multi-modal medical image of the plurality of multi-modal medical images;
calculating the latent space consistency loss of the segmentation loss from the segmentation mask for the multi-modal medical image by:

calculate an adaptive weight of the of the multi-modal image; and
calculating the latent space consistency loss using the adaptive weight of the of multi-modal image, wherein the consistency loss is calculated based on the feature representation of the multi-modal medical image at present epoch (t), and the the feature representation of the multi-modal medical image at previous epoch (t - 1); and

obtaining the segmentation loss by augmenting the obtained dice loss with the latent space consistency loss.

7. The processor implemented method as claimed in claim 1, wherein the steps for formulating the multi-objective organ prioritization reward function for the plurality of predefined hyperparameters of the trained Y-Net multi-modal image segmentation model comprises:

obtaining the IoU of the trained Y-Net multi-modal image segmentation model across each of the plurality of subjects, by comparing the ground truth with the superimposed segmentation mask of the multi-modal image;
obtaining the average IoU of the of the trained Y-Net multi-modal image segmentation model across the plurality of subjects; and
formulating the IoU, the average IoU, and the size of the trained Y-Net multi-modal image segmentation model, for the trained Y-Net multi-modal image segmentation model, to obtain the multi-objective organ prioritization reward function,

and wherein the steps for optimizing the plurality of predefined hyperparameters of the trained Y-Net multi-modal image segmentation model using the multi-objective organ prioritization reward function, to generate the organ prioritized Y-Net multi-modal image segmentation model comprises:

calculating a multi-objective organ prioritization reward function value of the multi-objective organ prioritization reward function,
wherein if the multi-objective organ prioritization value lies above the predefined reward function value, then the organ prioritized Y-Net multi-modal image segmentation model is obtained with the plurality of predefined hyperparameters, and
wherein if the multi-objective organ prioritization value lies below the predefined reward function value, then a genetic search is iteratively performed on the population of the plurality predefined hyperparameters of the trained Y-Net multi-modal image segmentation model, till the multi-objective organ prioritization value lies above the predefined reward function value, to obtain a plurality of new hyper parameters, and the organ prioritized Y-Net multi-modal image segmentation model is obtained based on the plurality of new hyper parameters.

8. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive an input data comprising a plurality of multi-modal medical images pertaining to a plurality of subjects, a plurality of ground truth segmentation masks, a plurality of predefined hyperparameters, a predefined reward function value, and a population of the plurality predefined hyperparameters;
sequentially train a genetic Y-Net multi-modal image segmentation model comprising a joint modality encoder, a bottle neck, and a plurality of modality-specific decoders, with each of the plurality of the

multi-modal medical images, for the plurality of predefined hyperparameters, using a plurality of skip connections, to generate a trained Y-Net multi-modal image segmentation model, wherein the steps for training the trained Y-Net multi-modal image segmentation model with a multi-modal medical image of the plurality of the multi-modal medical images, via the joint modality encoder, the bottleneck, and the plurality of modality-specific decoders comprises:

(a) extracting a plurality of multi-resolution fused feature maps from a plurality of modality-invariant features of the multi-modal medical image, via the joint modality encoder of the genetic Y-Net multi-modal image segmentation model;
(b) refining the plurality of multi-resolution fused feature maps, via the bottleneck of the genetic Y-Net multi-modal image segmentation model, to generate a plurality of modality-specific features that are enhanced with a plurality of complementary features;
(c) reconstructing a modality-specific segmentation mask of a plurality of modality specific-segmentation masks, by each of the plurality of modality-specific decoders, by feeding a plurality of spatial features as the plurality of skip connections obtained via the joint modality encoder and the plurality of modality-specific features obtained via the bottleneck, to each of the plurality of modality-specific decoders, wherein the plurality of modality specific-segmentation masks is superimposed to obtain a superimposed segmentation mask;
(d) calculating a segmentation loss comprising a dice loss and a latent space consistency loss, by the each of the plurality of modality-specific decoders of the genetic Y-Net multi-modal image segmentation model, using the plurality of modality-specific segmentation masks, and a ground truth segmentation mask of the plurality of ground truth segmentation masks; and
(e) obtaining the trained Y-Net multi-modal image segmentation model using the segmentation loss calculated by each of the plurality of modality-specific decoders for the plurality of predefined hyperparameters;

formulate a multi-objective organ prioritization reward function with an organ prioritization comprising an Intersection over Union (IoU), an average IoU, and a size of the trained Y-Net multi-modal image segmentation model, using the superimposed segmentation mask, for the plurality of predefined hyperparameters of the trained Y-Net multi-modal image segmentation model; and
optimize a plurality of predefined hyperparameters of the trained Y-Net multi-modal image segmentation model using the multi-objective organ prioritization reward function, to generate an organ prioritized Y-Net multi-modal image segmentation model.

**9.** The system as claimed in claim 8, wherein the organ prioritized Y-Net multi-modal image segmentation model during an inferencing stage, upon receiving one or more new multi-modal medical images, predicts an organ prioritized superimposed segmentation mask, for a medical image analysis.

**10.** The system as claimed in claim 8, wherein the plurality of multi-modal medical images comprises a plurality of Computed Tomography (CT) scan images, a plurality of Magnetic Resonance Imaging (MRI) scan images, a plurality of X-ray scan images, and a plurality of positron emission tomography (PET) scan images, and wherein each of the plurality of multi-modal medical images comprises the plurality of modality-invariant features.

**11.** The system as claimed in claim 8, wherein the steps for extracting the plurality of multi-resolution fused feature maps from the plurality of modality-invariant features of the plurality of multi-modal images, via the joint modality encoder of the genetic Y-Net multi-modal image segmentation model comprises:

performing a feature transformation on the plurality of modality-invariant features through a plurality of shared convolutional layers of the genetic Y-Net multi-modal image segmentation model, to generate a plurality of transformed modality-invariant features;
performing a cross-attention mechanism on the plurality of transformed modality-invariant features, to obtain a plurality of cross modality features; and
aggregating the plurality of spatial features of the joint modality encoder with the plurality of cross modality features, to obtain a feature representation comprising a plurality of multi-resolution fused feature maps, wherein the plurality of multi-resolution fused feature maps are aggregated features of the plurality of modality-invariant features, and wherein the feature representation is used for calculating the latent space consistency loss.

**12.** The system as claimed in claim 8, wherein the steps for refining the plurality of multi-resolution fused feature maps, via

the bottleneck of the genetic Y-Net multi-modal image segmentation model comprises:

refining the plurality of multi-resolution fused feature maps, using an Atrous Spatial Pyramid Pooling (ASPP) technique, to generate a plurality of multiscale features; and
refining the plurality of multiscale features, using a Squeeze-and-Excitation technique, to generate the plurality of modality-specific features.

**13.** The system as claimed in claim 8, wherein the steps for calculating the segmentation loss comprising the dice loss and the latent space consistency loss, by each of the each of the plurality of modality-specific decoders of the genetic Y-Net multi-modal image segmentation model comprises:

calculating the dice loss of the segmentation loss from the segmentation mask, and the ground truth mask, for the multi-modal medical image of the plurality of multi-modal medical images;
calculating the latent space consistency loss of the segmentation loss from the segmentation mask for the multi-modal medical image by:

calculate an adaptive weight of the of the multi-modal image; and
calculating the latent space consistency loss using the adaptive weight of the of multi-modal image, wherein the consistency loss is calculated based on the feature representation of the multi-modal medical image at present epoch (t), and the the feature representation of the multi-modal medical image at previous epoch ($t$ - 1); and

obtaining the segmentation loss by augmenting the obtained dice loss with the latent space consistency loss.

**14.** The system as claimed in claim 8, wherein the steps for formulating the multi-objective organ prioritization reward function for the plurality of predefined hyperparameters of the trained Y-Net multi-modal image segmentation model comprises:

obtaining the IoU of the trained Y-Net multi-modal image segmentation model across each of the plurality of subjects, by comparing the ground truth with the superimposed segmentation mask of the multi-modal image;
obtaining the average IoU of the of the trained Y-Net multi-modal image segmentation model across the plurality of subjects; and
formulating the IoU, the average IoU, and the size of the trained Y-Net multi-modal image segmentation model, for the trained Y-Net multi-modal image segmentation model, to obtain the multi-objective organ prioritization reward function,

and wherein the steps for optimizing the plurality of predefined hyperparameters of the trained Y-Net multi-modal image segmentation model using the multi-objective organ prioritization reward function, to generate the organ prioritized Y-Net multi-modal image segmentation model comprises:

calculating a multi-objective organ prioritization reward function value of the multi-objective organ prioritization reward function,
wherein if the multi-objective organ prioritization value lies above the predefined reward function value, then the organ prioritized Y-Net multi-modal image segmentation model is obtained with the plurality of predefined hyperparameters, and
wherein if the multi-objective organ prioritization value lies below the predefined reward function value, then a genetic search is iteratively performed on the population of the plurality predefined hyperparameters of the trained Y-Net multi-modal image segmentation model, till the multi-objective organ prioritization value lies above the predefined reward function value, to obtain a plurality of new hyper parameters, and the organ prioritized Y-Net multi-modal image segmentation model is obtained based on the plurality of new hyper parameters.

**15.** One or more non-transitory machine-readable information storage mediums comprising one or more instructions which when executed by one or more hardware processors cause:

receiving an input data comprising a plurality of multi-modal medical images pertaining to a plurality of subjects, a plurality of ground truth segmentation masks, a plurality of predefined hyperparameters, a predefined reward function value, and a population of the plurality of predefined hyperparameters;
sequentially training a genetic Y-Net multi-modal image segmentation model comprising a joint modality encoder,

a bottle neck, and a plurality of modality-specific decoders, with each of the plurality of the multi-modal medical images, for the plurality of predefined hyperparameters, using a plurality of skip connections, to generate a trained Y-Net multi-modal image segmentation model, wherein the steps for training the trained Y-Net multi-modal image segmentation model with a multi-modal medical image of the plurality of the multi-modal medical images, via the joint modality encoder, the bottleneck, and the plurality of modality-specific decoders comprises:

(a) extracting a plurality of multi-resolution fused feature maps from a plurality of modality-invariant features of the e multi-modal medical image, via the joint modality encoder of the genetic Y-Net multi-modal image segmentation model;
(b) refining the plurality of multi-resolution fused feature maps, via the bottleneck of the genetic Y-Net multi-modal image segmentation model, to generate a plurality of modality-specific features that are enhanced with a plurality of complementary features;
(c) reconstructing a modality-specific segmentation mask of a plurality of modality specific-segmentation masks, by each of the plurality of modality-specific decoders, by feeding a plurality of spatial features as the plurality of skip connections obtained via the joint modality encoder and the plurality of modality-specific features obtained via the bottleneck, to each of the plurality of modality-specific decoders, wherein the plurality of modality specific-segmentation masks is superimposed to obtain a superimposed segmentation mask;
(d) calculating a segmentation loss comprising a dice loss and a latent space consistency loss, by the each of the plurality of modality-specific decoders of the genetic Y-Net multi-modal image segmentation model, using the plurality of modality-specific segmentation masks, and a ground truth segmentation mask of the plurality of ground truth segmentation masks; and
(e) obtaining the trained Y-Net multi-modal image segmentation model using the segmentation loss calculated by each of the plurality of modality-specific decoders for the plurality of predefined hyperparameters;

formulating a multi-objective organ prioritization reward function with an organ prioritization comprising an Intersection over Union (IoU), an average IoU, and a size of the trained Y-Net multi-modal image segmentation model, using the superimposed segmentation mask, for the plurality of predefined hyperparameters of the trained Y-Net multi-modal image segmentation model; and
optimizing a plurality of predefined hyperparameters of the trained Y-Net multi-modal image segmentation model using the multi-objective organ prioritization reward function, to generate an organ prioritized Y-Net multi-modal image segmentation model.

SYSTEM
100
MEMORY
102
HARDWARE
PROCESSOR(S)
104
I/O INTERFACE(S)
106

FIG. 1

Spatial features
Modality-Specific Decoder 1
Multi-Resolution Fused Feature Maps
Modality-Specific Features
Input Data
Joint Modality Encoder
Bottleneck
Modality-Specific Features
...
Modality Specific Segmentation Masks
Trained Y-Net Multi-modal Image Segmentation Model for predefined hyperparameters
Modality-Specific Features
Genetic search for organ prioritization
Modality-Specific Decoder n
Superimposed Segmentation Mask
Spatial features
Organ Prioritized Y-Net Multi-modal Image Segmentation Model

FIG. 2

300 

Receiving an input data comprising plurality of multi-modal medical images pertaining to a plurality of subjects, a plurality of ground truth segmentation masks, a plurality of predefined hyperparameters, a predefined reward function value, and a population of the plurality predefined hyperparameters **302**

Sequentially training a genetic Y-Net multimodal image segmentation model comprising a joint modality encoder, a bottle neck, and a plurality of modality-specific decoders, with each of the plurality of the multimodal images, for the plurality of predefined hyperparameters, using a plurality of skip connections, to generate a trained Y-Net multimodal image segmentation model by: **304**

Extracting a plurality of multi-resolution fused feature maps from a plurality of modality-invariant features of the plurality of multi-modal images, via the joint modality encoder of the genetic Y-Net multimodal image segmentation model **304a**

Refining the plurality of multi-resolution fused feature maps, via the bottleneck of the genetic Y-Net multimodal image segmentation model, to generate a plurality of modality-specific features that are enhanced with a plurality of complementary features **304b**

A

FIG. 3A

A

Reconstructing a modality-specific segmentation mask of a plurality of modality specific-segmentation masks, by each of the modality specific decoders by feeding a plurality of spatial features as the plurality of skip connections obtained via the joint modality encoder and the plurality of modality-specific features obtained via the bottleneck, to each of the plurality of modality -specific decoders **304c**

Calculating a segmentation loss comprising a dice loss and a latent space consistency loss by by the each of the plurality of modality-specific decoders of the genetic Y-Net multimodal image segmentation model, using the segmentation mask, and a ground truth segmentation mask of the plurality of ground truth segmentation masks **304d**

Obtaining the trained Y-Net multimodal image segmentation model using the calculated segmentation loss for the plurality of predefined hyperparameters **304e**

Formulating a multi-objective organ prioritization reward function with an organ prioritization comprising an Intersection over Union (IoU), an average IoU, and a size of the model, for the plurality of predefined hyperparameters of the trained Y-Net multimodal image segmentation model **306**

Optimizing a plurality of hyperparameters of the trained Y-Net multimodal image segmentation model using the multi-objective organ prioritization reward function, to generate an organ prioritized Y-Net multimodal image segmentation model **308**

FIG. 3B

FIG. 4A FIG. 4B FIG. 4C FIG. 4D

Europäisches Patentamt
European Patent Office
Office européen des brevets

# EUROPEAN SEARCH REPORT

Application Number

EP 25 22 6129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | DASGUPTA SOMA ET AL: "Y-Net: A Compact Edge-Friendly Model for Multi-Modal Medical Image Segmentation", 2025 IEEE INTERNATIONAL CONFERENCE ON PERVASIVE COMPUTING AND COMMUNICATIONS WORKSHOPS AND OTHER AFFILIATED EVENTS (PERCOM WORKSHOPS), IEEE, 17 March 2025 (2025-03-17), pages 243-248, XP034943193, DOI: 10.1109/PERCOMWORKSHOPS65533.2025.00072 [retrieved on 2025-06-19] * the whole document * ----- | 1-15 | INV. G06T7/11 |
| A | LI ZHIYANG ET AL: "Multi-modal remote sensing image segmentation based on attention-driven dual-branch encoding framework", JOURNAL OF APPLIED REMOTE SENSING, SOCIETY OF PHOTO-OPTICAL INSTRUMENTATION ENGINEERS, 1000 20TH ST. BELLINGHAM WA 98225-6705 USA, vol. 18, no. 2, April 2024 (2024-04), page 26506, XP060207546, ISSN: 1931-3195, DOI: 10.1117/1.JRS.18.026506 [retrieved on 2024-06-22] * abstract * * section 2 * ----- | 1-15 | TECHNICAL FIELDS SEARCHED (IPC): G06T |
| A | US 2024/412374 A1 (LIU HONG [CN] ET AL) 12 December 2024 (2024-12-12) * the whole document * ----- | 1-15 | |
| | -/-- | | |

The present search report has been drawn up for all claims

1

| Place of search | Date of completion of the search | Examiner |
|---|---|---|
| Munich | 6 May 2026 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 22 6129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QI DOU ET AL: "Unpaired Multi-modal Segmentation via Knowledge Distillation", ARXIV.ORG, CORNELL UNIVERSITY LIBRARY, 201 OLIN LIBRARY CORNELL UNIVERSITY ITHACA, NY 14853, 6 January 2020 (2020-01-06), XP081575530, * abstract * * section III * ----- | 1-15 | |
| A | HAOCHUAN JIANG ET AL: "Max-Fusion U-Net for Multi-Modal Pathology Segmentation with Attention and Dynamic Resampling", ARXIV.ORG, CORNELL UNIVERSITY LIBRARY, 201 OLIN LIBRARY CORNELL UNIVERSITY ITHACA, NY 14853, 5 September 2020 (2020-09-05), XP081757447, * abstract * * section 2 * ----- | 1-15 | |

TECHNICAL FIELDS SEARCHED (IPC)

The present search report has been drawn up for all claims

1

| Place of search | Date of completion of the search | Examiner |
|---|---|---|
| Munich | 6 May 2026 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 22 6129

This annex lists the patent family members relating to the patent documents cited in the above-mentioned European search report. The members are as contained in the European Patent Office EDP file on
The European Patent Office is in no way liable for these particulars which are merely given for the purpose of information.

06-05-2026

| Patent document cited in search report | Publication date | Patent family member(s) | Publication date |
|---|---|---|---|
| US 2024412374 A1 | 12-12-2024 | CN 117036181 A | 10-11-2023 |
| | | US 2024412374 A1 | 12-12-2024 |
| | | WO 2024087858 A1 | 02-05-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202521023532